# EUROPEAN PATENT SPECIFICATION

(11) **EP 4 460 528 B1**
(45) Date of publication and mention of the grant of the patent: **16.07.2025**
(21) Application number: 23700904.8
(22) Date of filing: 05.01.2023
(51) Int. Cl.: C08B 15/06, C08L 1/08, C08B 16/00, D01F 2/00

(54) **CELLULOSE CARBAMATE POLYMER**
CELLULOSECARBAMATPOLYMER
POLYMÈRE DE CARBAMATE DE CELLULOSE

(30) Priority: 07.01.2022 FI 20225009
(43) Date of publication of application: 13.11.2024
(73) Proprietor: Infinited Fiber Company Oy, 02150 Espoo (FI)
(72) Inventor: MALANIN, Erkki, 02150 Espoo (FI); MÄKELÄ, Jani, 02150 Espoo (FI); NUOPPONEN, Markus, 02150 Espoo (FI); SIREN, Sakari, 02150 Espoo (FI)
(74) Representative: Laine IP Oy
(86) International application number: PCT/FI2023/050011
(87) International publication number: WO 2023/131749

(56) References cited:
- WO-A1-2021/181007
- MÄÄTTÄNEN MARJO ET AL: "Pre-treatments of pre-consumer cotton-based textile waste for production of textile fibres in the cold NaOH(aq) and cellulose carbamate processes", CELLULOSE, vol. 28, no. 6, 2 March 2021 (2021-03-02), pages 3869 - 3886, XP037420445, ISSN: 0969-0239, DOI: 10.1007/S10570-021-03753-6

## Description

### FIELD

The present invention relates to a cellulose carbamate polymer. The present invention further relates to a composition comprising particulate cellulose carbamate. Still further, the present invention relates to coagulated fibres of cellulose carbamate as well as coagulated films of cellulose carbamate. A method of determining the presence of cellulose carbamate fibres or films in an article is also disclosed. Further, the present invention relates to a shaped article, especially a moulded article comprising cellulose carbamate.

### BACKGROUND

Currently almost all post-consumer textile waste is sent to incineration or landfills despite approximately 95 % of textiles being recyclable. Only a small portion of pre-consumer waste is mechanically recycled. Since the beginning of 2016 disposing of used textiles as landfill has been prohibited in the European Union (EU). Thus, in EU countries, textiles and their raw materials that cannot be reused or recycled are typically burnt in energy production plants.

Naturally, recycling would be preferred. The clothing textile market is predominantly based on either cotton or polyester, both of which have an environmental impact. Cotton growing, for example, requires huge amounts of water as well as pesticides and artificial fertilisers. The global demand for cotton has seriously outgrown the planet's resources for producing virgin material. Therefore, it is essential that postconsumer textile waste is recycled. Processing textile materials to obtain reusable fibres is known, e.g. from WO 2013/124265 A1, which describes the regeneration of a cellulose containing material by dispersing and precipitation.

One process used in the recycling of cotton-based textile waste materials is described in WO 2018/197756 in which the textile material is treated in an alkaline extraction and then further treated with an acid to cause at least a partial dissolution of the cotton-based textile material.

Another known technique utilised in recycling is the hydrolysis of the fibres. Typically, it is preceded by a mechanical removal of metals and hard polymer pieces, such as buttons and zippers. For example, WO 2010/124944 A1 discloses a process for the hydrolysis of cellulose.

The Lyocell process is a process in which cellulose is regenerated by dissolving a cellulosic starting material in a first generation ionic liquid, NMMO. Ioncell - F, developed from the lyocell process, is a regeneration process including a dissolution of the starting material using a recently developed ionic liquid as solvent (WO 2014/162062 A1). The BioCelSol process, in turn, utilises an enzymatic treatment of the starting material. Both of these processes, however, focus on preparing textiles from wood.

The chemically separated fraction of cellulose fibres can subsequently be used for various purposes, including carbamation or spinning.

It is known from US 7,662,953 how carbamate cellulose is manufactured from high quality virgin cellulose raw materials such as dissolving pulp. A multi-phase dissolution technique for carbamate cellulose is presented in US 8,066,903, where it is taught how a low temperature is applied in the dissolution and how the solution is prepared by first wetting the mass in low diluted alkali and then in highly concentrated and strongly chilled alkali.

A separation method involving a combination of mechanical and chemical processes for the separation of cellulose fibres from a textile material comprising cellulose fibres and other fibre and non-fibre elements is described in EP 3 511 448 A1. In such a process, the textile materials are first shredded in order to remove larger non-fibre foreign bodies. The remaining fibre components are then mechanically treated to separate cellulose fibres from non-cellulose fibres before the cellulose fibres undergo a chemical treatment to remove any non-cellulose fibres still remaining on the cellulose fibres.

A process for the separation of the cellulosic part from a polyester and cellulose composition is described in international patent application publication WO 2020/013755 A1. The application describes a process for separation of the cellulosic part from a raw material composition comprising polyester and cellulose containing composition, a cellulosic composition obtainable from the process for separation, a mixture comprising polyester hydrolysis products obtainable from the process for separation, a pulp, a dissolving pulp, a paper pulp, a regenerated cellulosic fibres product, and a paper product. In the separation process, a polyester/cellulose composition is contacted with a hydrolyzing liquor comprising an alkaline solution.

US 4,345,039 discloses a method of recovering polyester fibres from polyester/cotton textile waste. In the method, the mixed textile is treated with anhydrous HCl gas, which while not damaging to the polyester, degrades the cellulosic material to cellulosic powder and results in chlorinated hydrocarbons.

International patent application publication WO 2021/181007 A1 describes a method of separating cellulosic fibres and non-cellulosic fibres from a mixed fibre textile material comprising cellulosic and non-cellulosic fibres. The textile is mechanically disintegrated to open the textile structures before a two-step acid/alkaline chemical treatment is carried out. The recovered cellulosic fibres are carbamated.

### OBJECTS AND SUMMARY OF THE INVENTION

It is an aim of the present invention to overcome at least some of the problems associated with the prior art and provide a cellulose carbamate polymer with improved properties, e.g. to be suitable for providing a spinning dope the cellulose carbamate polymer has a degree of polymerisation lower than conventional cellulose carbamate. It is a further aim of the invention to provide cellulose carbamate with a narrow molecular weight distribution from which fibres having improved tensile strength may be spun.

The invention is defined by the features of the independent claims. Some specific embodiments are defined in the dependent claims.

According to a first aspect of the present invention, there is provided a cellulose carbamate polymer having an average intrinsic viscosity of 146 to 368 ml/g, a nitrogen content of 0.01 to 3.0 % by weight; a polydispersity index of 2.0 to 5.0; and having a content of p-terephthalate and/or p-terephthalic acid and/or unhydrolyzed or partly unhydrolyzed polyester of 0.00005 to 0.5 % by weight.

According to a second aspect of the present invention, there is provided a composition comprising particulate cellulose carbamate, said cellulose carbamate consisting of particles having an average particle size whereby greater than or equal to 90 wt-% of cellulose carbamate passes through a 260 µm sieve mesh, the share of less than 30 µm sieve fraction is greater than or equal to10 wt-% and the fibrous fraction has an average fibre length of less than or equal to 1.0 mm according to ISO 16065-2:2014 and having an average intrinsic viscosity of 146 to 368 ml/g, a nitrogen content of 0.01 to 3.0 wt-%, preferably 0.5 to 2.0 % by weight, a polydispersity index of 2.0 to 5.0, preferably 2.0 to 4.0, most preferably 2.0 to 3.5 and having a content of p-terephthalate and/or p-terephthalic acid and/or unhydrolyzed or partly unhydrolyzed polyester of 0.00005 to 0.5 % by weight.

According to a third aspect of the present invention there is provided coagulated cellulose carbamate material having an average intrinsic viscosity of 146 to 368 ml/g, a nitrogen content of up to 2.0 %, preferably up to 1.5 %, most preferably up to 1.0 % by weight, a polydispersity index of 2.0 to 5.0, preferably 2.0 to 4.0, most preferably 2.0 to 3.5, and having a content of p-terephthalate and/or p-terephthalic acid and/or unhydrolyzed or partly unhydrolyzed polyester in particular polyethylene terephthalate of 0.00005 to 0.1 % by weight.

According to a fourth aspect of the present invention there is provided coagulated films of cellulose carbamate having an average cellulose solution intrinsic viscosity of 146 to 368 ml/g, a nitrogen content of up to 2 % by weight, a polydispersity index of 2.0 to 5.0, preferably 2.0 to 4.0, most preferably 2.0 to 3.5, and having a content of p-terephthalate and/or p-terephthalic acid and/or unhydrolyzed or partly unhydrolyzed polyester in particular polyethylene terephthalate of 0.00005 to 0.1 % by weight.

According to a fifth aspect of the present invention there is provided a yarn, a textile, woven or knitted fabric, a textile garment comprising a cloth woven or fabric knitted wear from fibrous threads), at least a part of which consist of cellulose carbamate.

According to a sixth aspect of the present invention there is provided an article comprising a staple fibre, a shortcut fibre, flock, non-woven, wadding, weave, tow, flock, filament yarn, tow of filaments at least a part of which consist of cellulose carbamate.

According to a seventh aspect of the present invention there is provided an article comprising cellulose carbamate polymer having an average intrinsic viscosity of 146 to 368 ml/g, a nitrogen content of 0.01 to 3 % by weight; a polydispersity index of 2.0 to 5.0, preferably 2.0 to 4.0, most preferably 2.0 to 3.5, and having a content of p-terephthalate and/or p-terephthalic acid and/or unhydrolyzed or partly unhydrolyzed polyester of 0.00005 to 0.5 % by weight.

According to an eighth aspect of the present invention there is provided and article comprising particulate cellulose carbamate, said cellulose carbamate consisting of particles having an average particle size whereby greater than or equal to 90 % of cellulose carbamate passes through a 260 µm sieve mesh, the share of less than 30 µm sieve fraction is greater than or equal to10 % and the fibrous fraction has an average fibre length of less than or equal to 1.0 mm according to ISO 16065-2:2014 and having an average intrinsic viscosity of 146 to 368 ml/g, a nitrogen content of 0.01 to 3 % preferably 0.5 to 2.0 % by weight, a polydispersity index of 2.0 to 5.0, preferably 2.0 to 4.0, most preferably 2.0 to 3.5.

According to a ninth aspect of the present invention there is provided a method of determining the presence of cellulose carbamate by subjecting cellulose carbamate to UV light and detecting fluorescence at a wavelength in the range of 400 to 520 nm caused by said cellulose carbamate. Further, there is provided a method of determining the presence of cellulose carbamate, cellulose carbamate fibres or films in an article containing such cellulose carbamate, fibres or film, subjecting the article to UV light and detecting fluorescence at a wavelength in the range of 400 to 520 nm caused by said cellulose carbamate, fibres or film.

According to a tenth aspect of the present invention there is provided use of cellulose carbamate in an absorption material, a composite, a chromatographic column, an organic pigment, a glue or a microbiological activity stabiliser.

### BRIEF DESCRIPTION OF THE DRAWINGS

FIGURE 1 is a graph illustrating decrease of CED viscosity during carbamation as a function of time.
FIGURE 2 is a photograph showing cellulose carbamate fibre, tencel and viscose fibre (from top to bottom) under UV light.
FIGURE 3 is a light micrograph showing a knitted cellulose carbamate fabric sample excited with UV light at 365 nm (LP420 filter).
FIGURE 4 is a light micrograph showing a knitted cellulose carbamate fabric sample excited.
FIGURE 5 is a light micrograph showing a cross-cut of knitted cellulose carbamate fabric sample excited with UV light at 365 nm (LP420 filter).

### DETAILED DESCRIPTION

Cellulose carbamate is a carbamic-acid-ester derivative of cellulose which is insoluble in water and soluble in alkali. The derivative is obtained by heating urea together with cellulose. Polydispersity (PD) is M_{w}/Mₙ where M_{w} is the weight averaged molecular weight and Mₙ is the number averaged molecular weight, determined by a Gel Permeation Chromatography (GPC)/Size Exclusion Chromatography (SEC) instrument.

When a percentage is used, it refers to % by weight (weight percentage or wt-%) of the total weight, unless otherwise indicated.

Coagulated fibres and films etc. refer to fully finished end product of the process (in this application).

Nitrogen content in cellulose carbamate refers to amount of carbamate nitrogen (carbamate groups) chemically bound in cellulose. The nitrogen content (in wt-%) is measured according to SFS 5505:1988 The average intrinsic viscosity in ml/g is determined by ISO 5351:2010, average being the arithmetic mean. The content of p-terephthalate and/or p-terephthalic acid and/or unhydrolyzed or partly unhydrolyzed polyester (in wt-%) is determined by gas chromatography-mass spectrometry (GC-MS), as explained in more detail in the Experimental section (Examples 4 and 5).

As mentioned above it is an aim of the present invention to provide a cellulose carbamate polymer having improved properties. By means of the present invention it has surprisingly been found that a cellulose carbamate polymer having a lower degree of polymerisation or intrinsic viscosity and a narrower polydispersity index than conventional cellulose carbamate is provided that is particularly suitable for providing a dope for wet spinning fibres and/or for extruding films, and for forming other shaped articles.

According to an example aspect of the present invention there is provided a cellulose carbamate polymer having an average intrinsic viscosity of 146 to 368 ml/g, preferably 161 to 368 ml/g, suitably 182 to 267 ml/g; a polydispersity index of 2.0 to 5.0, preferably 2.0 to 4.0, most preferably 2.0 to 3.5; a nitrogen content of 0.01 to 3 % by weight. The cellulose carbamate polymer has a content of p-terephthalate and/or p-terephthalic acid and/or unhydrolyzed or partly unhydrolyzed polyester of 0.00005 to 0.5 % by weight, on the total weight of the polymer. The p-terephthalate and/or p-terephthalic acid and/or unhydrolyzed or partly unhydrolyzed polyester is present as a residue in the cellulose carbamate polymer obtained, due to the presence of textile waste comprising polyester in the raw material. It thus allows to identify the cellulose carbamate as a material at least partly originating from textile waste. The present material thus both comprises waste material and has properties making it suitable for use in textile industry. This has typically not been the case, but rather fibres made of recycled cellulose-based textile waste obtained via carbamation have not had sufficiently good properties (such as strength and low enough linear density) for being able to be used in conventional textile industry, either alone or mixed with other materials.

Optionally the cellulose carbamate polymer exhibits fluorescence, preferably at a wavelength in the range of 400 to 520 nm, typically when excited with UV light, preferably having a wavelength of 365 nm.

Thus, embodiments relate to a cellulose carbamate polymer having an average degree of polymerisation (DP) of 180 to 500, preferably 200 to 500, particularly 230 to 350. The degrees of polymerisation correspond to intrinsic viscosities of 146 to 368 ml/g, 161 to 368 ml/g and 182 to 267 ml/g, based on the CED viscosity measurement according to ISO 5351:2010. In order to have cellulose carbamate that is suitable for wet spinning of fibres and/or extruding films and for forming other shaped articles, the degree of polymerisation of the cellulose carbamate is preferably reduced from conventional values to the range of values described here.

The cellulose carbamate according to an embodiment has a nitrogen content of 0.01 to 3 % by weight (measured according to SFS 5505:1988, modified as described above) preferably having a maximum nitrogen content of 2.5 % by weight, suitably in the range of 0.5 to 2.0 % by weight, more preferably 1.5 % by weight of the cellulose carbamate. The cellulose carbamate has, according to an embodiment, a polydispersity index of 2.0 to 5.0, preferably 2.0 to 4.0, most preferably 2.0 to 3.5 as measured according to GPC/SEC, and it exhibits fluorescence. The polydispersity index may be modified e.g. by adjusting temperature, residence time and acid concentration in an acidic treatment step, by adjusting pH and ozone charge in an ozone bleaching and/or decolourisation step, by adjusting the hydrogen peroxide charge, pH and residence time in a hydrogen peroxide bleaching and/or decolourisation step and/or by adjusting pH and alkalinity, residence time, urea charge, carbamation temperature and carbamation pressure in a carbamation step. It is believed that ozone in decolourisation of coloured cellulosic waste will act upon colourants and colourising pigments and other colourising components by oxidation and by achieving decomposition primarily of the colourants and colourising pigments rather than of the cellulosic material as such. Decolourisation is thus preferred to bleaching.

Indeed, it is believed that hydrolysed terephatalic acid remains soluble when the decolouration is carried out in alkaline conditions, as the sodium salt of terephtalic acid is soluble. This has a positive impact on the washability of the product, compared to acidic ozone treatment. In the acidic ozone treatment, any hydrolysed terephtalic acid that remains in the mixture (i.e. that has not been washed away) after the alkaline treatment may precipitate in the fibre during the acidic ozone treatment/traditional bleaching. In case the decolouration is carried out in alkaline conditions, and the following steps are also carried out in alkaline conditions, the terephtalic acid is efficiently washed away from the fibres during the multiple washing stages. This leads to a low (less than 0.5 wt-%) terephtalic acid content of the final fibres, i.e. fibres that have less impurities than prior fibres, and thus be better quality fibres. A further advantage of carrying out the decolouration only in alkaline conditions, is that cellulose is no longer hydrolysed at least to a significant degree (contrary to acidic bleaching or decolouration). Thus, the narrow molar mass distribution obtained in the previous stages does not widen again, due to unnecessary hydrolysis of the cellulose.

According to an embodiment, the cellulose carbamate polymer is manufactured using a method comprising
- a mechanical pre-treatment of cellulose-based material comprising at least 50 wt-% of cellulose-containing waste, wherein at least 50 wt-% of the cellulose-containing waste is textile waste comprising polyester, by at least grounding or shredding to elements having fibres of a length of ≤ 25 mm;
- an acidic treatment of the mechanically treated cellulose-based material;
- an alkaline treatment after the acidic treatment, to at least partially hydrolyse the polyester;
- decolourising the treated cellulose-based material with ozone under alkaline conditions; and
- a cellulose carbamation step to form cellulose carbamate from the alkaline-treated cellulose-based material;
wherein a polydispersity index of the resulting cellulose carbamate is adjusted to 2.0-5.0 by the acidic treatment.

This method indeed allows the manufacturing of cellulose carbamate polymer according to this description, which has properties making it suitable for, i.a., textile industry, while using textile waste comprising polyester as raw material. The present method allows tailoring the polydispersity index in the acidic treatment. The degree of polymerisation can then be tailored in the carbamation step, by adjusting at least one of pH, alkalinity, residence time, urea charge, carbamation temperature and carbamation pressure.

By elements in the method it is meant pieces, fibres, single staple fibres and similar, i.e. the grounding or shredding (both can also be used) can also be used to disintegrate the textile waste down to the level of fibres.

In one embodiment, polydispersity (PD) is adjusted with an acid, such as mineral or organic acid, or a combination of acids. Sulphuric acid can be employed as an acid for adjusting the PD. It is beneficial for the optimum molecular weight distribution of the feedstock, that PD adjustment by acidic treatment step is included either in the preparation of cellulose feedstock or that the feedstock is treated with acid prior to mixing the cellulose with urea in carbamation, and preferably before alkaline treatment for the at least partial hydrolysis of polyester. A reduction in the polydispersity index to a value in the range of 2.0 to 5.0, preferably 2.0 to 4.0, most preferably 2.0 to 3.5, from the conventional values of conventional cellulose carbamate (which typically have a polydispersity index of 8-11) provides a cellulose carbamate, which in turn provides fibres with improved tensile strength. Spun fibres having improved yield tenacity, typically in the range of 2.0-2.9 cN/dtex, can be obtained by using cellulose carbamate polymer with a narrower molecular weight distribution (a lower polydispersity index) coupled with a lower average intrinsic viscosity compared to material comprising a wider molecular weight distribution with a higher average intrinsic viscosity, i.e. the properties disclosed herein. Dissolution of cellulose carbamate having an optimal average degree of polymerisation coupled with optimal polydispersity is improved as a consequence of the cellulose carbamate dope being more homogenous. The nitrogen content of the cellulose carbamate can be modified e.g. by adjusting pH and alkalinity, residence time, urea charge, carbamation temperature and/or carbamation pressure in a carbamation step.

Fluorescence is the emission of light by a substance that has absorbed light or other electromagnetic radiation. The cellulose carbamate according to an embodiment exhibits fluorescence. Typically, light emitted by fluorescent material has a longer wavelength than the absorbed radiation. The cellulose carbamate according to an embodiment emits blue/turquoise light, e.g. at a wavelength in the range of 450-490 nm, which may be observed visually when said cellulose carbamate is exposed to UV-light, particularly UV light at a wavelength of 365 nm. The fluorescence emission wavelength depends on the excitation wavelength. The cellulose carbamate according to an embodiment exhibits fluorescence at a wavelength in the range of 400 to 520 nm (blue) when excited with UV light, particularly at 365 nm and exhibits fluorescence at a wavelength in the range of 600 to 750 nm (red) when excited at 546 nm.

The cellulose carbamate has a p-terephthalate content of 0.00005 to 0.5 % by weight, in particular less than 0.2 % by weight, preferably less than 0.1 % by weight. In one embodiment, p-terephthalate is present in the form of an acid (p-terephthalic acid) and/or in the form of an anion (p-terephthalate) and/or as unhydrolyzed or partly unhydrolyzed polyester such as polyethylene terephthalate (PET). By partly unhydrolyzed polyester is here meant that at most 50 % of the alkoxy groups are not hydrolyzed. A hydrolyzed polyester has fully decomposed to terephthalic acid, and intermediates are partly hydrolyzed (i.e. partly unhydrolyzed). If 50 % of the bonds withing the polyester molecules are broken, the material is in the form of oligomers. The amount of p-terephthalate and/or unhydrolyzed PES present in the cellulose carbamate is related to the purity of the cellulose used in the preparation of the cellulose carbamate. For example, if the raw material comes from a polycotton blend, p-terephthalate is an impurity resulting from the hydrolysis of polyester. Residues of PES or its hydrolysis products can be found in cellulose carbamate if polycotton has been at least partly used as a raw material of the cellulose carbamate polymer. Polycotton feedstock may be subjected to an alkaline treatment step, wherein the polyester may be at least partly hydrolysed.

Residues of PES and its hydrolysis products can be separated and measured by chromatography, e.g. by gas chromatography coupled with mass spectrometer.

Cellulose carbamate may contain other impurities depending on the source of the raw materials. The cellulose carbamate derived from polycotton may contain for example traces of synthetic fibres other than polyester such as nylon, polyethylene, polypropylene, elastane, acryl, modacrylic, chlorofibres and traces of non-fibre polymers such as natural rubber and synthetic polyisoprene and may contain various nitrogen containing impurities such as urea and biuret. Cellulose carbamate in particulate form is washed at least partly free from water dissolvable substances containing nitrogenous water soluble substances, the content of water insoluble substances in dried cellulose carbamate is over 98 % by weight of the (washed and dewatered/dried) particulate form cellulose carbamate, preferably over 99 % by weight of the (washed and dewatered/dried) particulate form cellulose carbamate and suitably over 99.5 % by weight of the (washed and dewatered/dried) particulate form cellulose carbamate. In one embodiment, the cellulose carbamate has a biuret concentration of less than 0.3 % by weight of the dry cellulose carbamate. It has been found that by controlling the total amount of water soluble substances, the biuret concentrations can be maintained at a level of less than 0.3 % by weight of the (washed and dewatered/dried) particulate form cellulose carbamate. It has further been found that cellulose carbamates having biuret concentrations of less than 0.3 % are particularly suitable for use in the preparation of cellulose carbamate dope. Cellulose carbamate dopes may be used for example for wet spinning of fibres and/or for extruding films, and for forming other shaped articles such as preparation of sponges and/or foams.

Nitrogen is present in the cellulose carbamate as a component of the carbamate anion. By limiting the amount of nitrogen present in the cellulose carbamate, i.e. by adapting the carbamation process, as described above, the cellulose carbamate can be tailored to particular uses, e.g. in one embodiment the cellulose carbamate has a maximum nitrogen content of 2.0 % by weight of the cellulose carbamate, which is particularly suitable for alkaline wet spinning process. In a further embodiment, the cellulose carbamate has a maximum nitrogen content of 1.5 % by weight of the cellulose carbamate, which is preferable for acidic wet spinning process. The nitrogen content in cellulose carbamate is preferably between 0.5 to 2.0 % by weight.

In a further embodiment the cellulose carbamate polymer has a number average molecular mass (Mₙ) of less than or equal to 80,000 g/mol, preferably in the range of 30,000 to less than or equal to 80,000 g/mol, suitably in the range of 30,000 to 60,000 g/mol. Cellulose carbamate polymer having such a number average molecular mass is suitable for providing films, and fibres and filaments that are suitable for using in woven and non-woven articles, such as a fabric or an item of clothing or interior furnishing such as curtains, drapes, tablecloths, towels, bathroom accessories, carpets, rugs and upholstery. It has been found that cellulose carbamate polymer, having a number average molecular mass (Mₙ) of less than or equal to 80,000 g/mol, films, fibres and filaments and articles made therefrom and articles comprising such films, fibres and filaments fluoresce at a wavelength of 400 to 520 nm when subjected to excitation. Fluorescence of the cellulose carbamate may be due to the presence of nitrogen in embodiments of the products, but this is only one possibility, and the scope of the invention is not to be limited to this explanation.

Further embodiments relate to compositions comprising particulate cellulose carbamate. In one embodiment the cellulose carbamate of the composition consists of particles having an average particle size whereby greater than or equal to 90 wt-% of cellulose carbamate passes through a 260 µm sieve mesh, the share of less than 30 µm sieve fraction is greater than or equal to10 wt-% and the fibrous fraction has an average fibre length of less than or equal to 1.0 mm according to ISO 16065-2:2014 and having an average intrinsic viscosity of 146 to 368 ml/g, preferably 161 to 368 ml/g, suitably 182 to 267 ml/g, a nitrogen content of 0.01 to 3.0 %, preferably 0.5 to 2.0 % by weight, a polydispersity index of 2.0 to 5.0, preferably 2.0 to 4.0, most preferably 2.0 to 3.5. The composition optionally exhibits fluorescence, preferably at a wavelength in the range of 400 to 520 nm, typically when excited with UV light, preferably having a wavelength of 365 nm.

In a further embodiment the cellulose carbamate of the composition has a number average molecular mass (Mₙ) of less than or equal to 80,000 g/mol, preferably in the range of 30,000 to less than or equal to 80,000 g/mol, suitably in the range of 30,000 to 60,000 g/mol. The number average molecular mass relates directly to the polydispersity index and therefore both can be adjusted during carbamation, or during the process steps related to the pretreatment of cellulose prior to carbamation, to provide carbamate with the desired properties. The particle size distribution of the cellulose carbamate composition was also determined by particle analyser: 90 wt-% of the particles had a diameter of less than 206 µm and 98 wt-% had a diameter of less than 500 µm, D50 value was 73 µm. Furthermore, fibre length of the cellulose carbamate fibres in the cellulose carbamate composition was also measured by fibre image analyser. Fibre Length Weight according to ISO 16065-2:2014 (pulps - determination of fibre length by automated optical analysis) is less than or equal to 1.0 mm, typically in the range of 0.1 to 0.9 mm, suitably 0.2 to 0.8 mm, preferably 0.5 to 0.7 mm.

The cellulose carbamate exhibits a content of p-terephthalate and/or p-terephthalic acid and/or unhydrolyzed or partly unhydrolyzed polyethylene terephthalate of 0.00005 to 0.5 %, in particular 0.0001 to 0.1 % by weight. As mentioned above, the amount of p-terephthalate provides an indication of the purity of the cellulose used in the preparation of the cellulose carbamate. Additionally, the presence of p-terephthalate indicates that the cellulose for carbamation originates from a polycotton blend.

In an embodiment the composition comprises at least 20 %, preferably 40 to 60 % or more, most preferably 90 to 100 % by weight of the composition of dry solids. Typically, cellulose carbamate (as an intermediate for integrated dissolution/spinning process) may contain also free water: cellulose carbamate dewatered e.g. by pressing contains preferably 40 to 60 % or more of cellulose carbamate (and less than 60 % of water), the dried cellulose carbamate preferably contains more than 90 % cellulose carbamate and less than 10 % of water. All the percentage are by weight.

In an embodiment the composition comprises 98 to 100 wt-% by mass of said cellulose carbamate, calculated from the water insoluble solid dry matter, preferably the composition comprises over 98 % by weight of the cellulose carbamate, preferably over 99 % by weight of the cellulose carbamate and suitably over 99.5 % by weight of the cellulose carbamate.

In a preferred embodiment the composition is produced by carbamation of cellulosic material obtained from a feedstock at least partly comprising cotton, e.g. mixed cellulosic textile waste, such as polycotton. In the present context, "polycotton" stands for blends of cotton fibres and polyester fibres. The ratio between the cotton fibres and the polyester fibres can vary in broad ranges, typically from 30 to 99 %, in particular 80 to 98 % by weight, of the fibres are cotton and the remaining part polyester fibres, although the polyester blends may also contain minor amounts (typically less than about 5 % by weight) of other fibres and/or non-fibrous particles, such as synthetic fibres, including elastane. Embodiments of the method may be carried out using cellulose carbamate produced from mixtures comprising in addition virgin or native chemical or dissolving pulp prepared from wood fibres or non-wood fibres or a cellulose carbamate derived from natural plant fibres as such in or in the form of chemical pulp or dissolving type pulp, or comprising other recycled cellulose-based material such as cardboard or paper..

Chemical pulp or dissolving pulp prepared from wood species such as pine, spruce, birch, beech, aspen, maple, larch, acacia, eucalyptus, hemlock, tupelo, and/or oak or non-woods such as stalk fibres (wheat straw, rice straw, barley straw, bamboo, bagasse and/or reed). The origin of the feedstock can be either the virgin form of the chemical or dissolving pulp, or the recycled feedstocks such as recycled paper and/or cardboard containing chemical pulp or dissolving type pulp.

Natural plant fibres as such or in the form of chemical pulp or dissolving pulp are also useful as feedstock sources. The origin of natural plant fibres can be either their virgin forms or natural plant fibre containing textiles or recycled natural fibre containing textiles. Natural plant fibres include seed fibres such as cotton and kapok; bast fibres such as hemp, jute, kenaf, ramie, abaca and linen (flax); leaf fibres such as manila, sisal, pineapple and banana; fruit fibres such as coir.

Thus, in one embodiment, recycled fibrous feedstock is used as raw material for producing of cellulose carbamate.

Particle sizes play a role in the suitability of the composition for various uses. In one embodiment the composition consists of cellulose carbamate particles having an average particle size whereby greater than or equal to 90 wt-% of cellulose carbamate passes through a 260 µm sieve mesh, the share of less than 30 µm sieve fraction is greater than or equal to 10 wt-% and the fibrous fraction has an average fibre length of less than or equal to 1.0 mm, typically in the range of 0.1 to 0.9 mm, suitably 0.2 to 0.8 mm, preferably 0.5 to 0.7 mm, according to ISO 16065-2:2014. Cellulose carbamate is in its nature a fibrous material. Thus, fibres of cellulose carbamate from which the particulate cellulose carbamate is ground have a fibre length typically in the region of one tenth of the fibre length of the recycled polycotton feedstock material. In one embodiment a mechanical step prior to chemical treatment steps and carbamation comprises the recycled polycotton feedstock material being ground and/or shredded until it comprises pieces having fibres having a fibre length of ≤ 25 mm, preferably ≤ 10 mm, suitably 1 to 7 mm, most suitably 5 to 7 mm in length. Grinding steps in cellulose carbamate process comprises the use of high shear force mixing during mixing of cellulose and urea in a high consistency prior to carbamation step and grinding of carbamated cellulose before and after a washing step. Suitable devices for mechanical treatment are e.g. knife mill, hammer mill, ball mill, disc type mill, pin mill, counter rotating device, sieve press devices and extruders. In one embodiment, the suitable device for a high shear force mixing of cellulose and urea is a pellet press, and the mechanical treatment can be performed by using one or more pellet presses in series. In embodiments the cellulose carbamate has a fibre length of 1 mm or less, typically in the range of 0.1 to 0.9 mm, suitably 0.2 to 0.8 mm, preferably 0.5 to 0.7 mm.

In an embodiment, the composition has a bulk density of in the range of 250 kg/m³ to 800kg/m³, preferably 300-500 kg/m³. The bulk density is an important property of the composition when considering handling, processing, storage and transportation of the product. Final composition should not be fluffy or loose and higher bulk density is preferred. The bulk density of the composition is adjusted by adjusting the degree of polymerisation or viscosity and the polydispersity index of the cellulose carbamate. The bulk density may be affected by grinding steps during the carbamation process. Final product maybe compressed during packaging if not directly used for dissolution or preparation of shaped articles. The degree of polymerisation or viscosity and the polydispersity index are adjusted as described above. By decreasing the degree of polymerisation and narrowing the polydispersity index, the bulk density of the composition is increased.

Embodiments relate to coagulated fibres of cellulose carbamate. In one embodiment the coagulated fibres of cellulose carbamate comprise cellulose carbamate having an intrinsic viscosity of 146 to 368 ml/g, preferably 161 to 368 ml/g, suitably 182 to 267 ml/g, a nitrogen content of up to 3 % by weight of the cellulose carbamate, a polydispersity index of 2.0 to 5.0, preferably 2.0 to 4.0, most preferably 2.0 to 3.5 and have a content of p-terephthalate, and/or p-terephthalic acid and/or unhydrolyzed or partly unhydrolyzed polyethylene terephthalate (PES) of 0.00005 to 0.1 % by weight, and optionally fluoresce, preferably at a wavelength in the range of 400 to 520 nm typically when excited with UV light, preferably having a wavelength of 365 nm.

In a particular embodiment the fibres comprise cellulose carbamate exhibiting a number average molecular mass (Mₙ) of less than or equal to 80,000 g/mol, preferably in the range of 30,000 to less than or equal to 80,000 g/mol, suitably in the range of 30,000 to 60,000 g/mol.

In a suitable embodiment, the fibres are obtained by spinning of cellulose carbamate having a nitrogen content of 0.1 to 2 % by weight, preferably 0.2 to 1.0 % by weight of the cellulose carbamate, in an acidic spin bath to form fibres, and recovering the fibres.

In another embodiment, the fibres are obtained by spinning of cellulose carbamate having a nitrogen content of 0.3 to 3 % by weight, preferably 0.5 - 2.2 %, in particular 0.7 - 1.8 % by weight in an alkaline spin bath to form fibres, and recovering the fibres.

In a further embodiment the fibres are obtained by providing a composition according to any of the above-described embodiments of the composition, forming a dope of said composition, and coagulating the fibres by a wet spinning process in an acid spin bath to form fibres, recovering the fibres from the spin bath, and stretching the fibres at acidic conditions.

In a still further embodiment, the fibres are obtained by providing a composition according to any of the above-described embodiments of the composition, forming a dope of said composition, and coagulating the fibres by wet spinning process in an alkaline spin bath to form fibres, recovering the fibres from the spin bath, and stretching the fibres at alkaline conditions.

The dope may also be cellulose carbamate dissolved in ionic liquid for a process in which cellulose carbamate is coagulated or regenerated by dry-jet wet spinning, in which extruded dope is drawn over an air gap into water. The ionic liquid may be an organic compound developed for direct dissolution of cellulose. Preferably, the ionic liquid is 4-methylmorpholine 4-oxide (NMMO). In a further embodiment the cellulose carbamate has a maximum nitrogen content of 3.0 % by weight of the cellulose carbamate for dry-jet wet spinning process.

In another embodiment, the cellulose carbamate dope may be mixed with a viscose dope (a cellulose solution prepared by means of viscose method) and the mixture is subjected to wet spinning to obtain coagulated fibres of cellulose carbamate.

The carbamate group is stable in slightly alkaline conditions e.g. air dry cellulose carbamate in a fibrous powder form i.e. the particulate form is stable. Compositions comprising particulate cellulose carbamate are alkaline, having pH of less than or equal to 10, preferably less than or equal to 9.0. pH is determined by suspending 10 g of dry cellulose carbamate in 90 g of water and measuring pH of decanted water solution after standing for 30 min at 20 degrees Celsius.

The carbamate group is stable also in neutral conditions or acidic conditions (e.g. under acidic spinning and stretching conditions). The carbamate group hydrolyses in concentrated alkaline conditions (e.g. dissolved cellulose carbamate hydrolyses in aqueous alkaline solution having NaOH content of at least e.g. 6.5 % by weight of dope). Cellulose carbamate starts to hydrolyse instantly after dissolving in alkaline conditions for making a dope. The higher the temperature of dope and the longer the delay between dissolving and coagulation, the higher the rate of hydrolysis and the lower the amount of carbamate groups bound in cellulose i.e. the nitrogen content bound in cellulose. The rate of the hydrolysis determines the degree of substitution of cellulose carbamate. Different spinning baths, e.g. alkaline versus acidic spinning baths in wet spinning process, subsequent stretching step(s), further washing and further after-treatment processes may be used to manufacture fibres with preferred or more suitable properties.

Optionally the filaments are cut into fibres, whereby in cellulose carbamate staple filaments or fibres are obtained, especially cutting into staple fibres or shortcuts.

An after-treatment process may optionally comprise one or more of the following process steps: a) post-hydrolysis of carbamate groups by hot alkaline liquor (e.g. cellulose carbamate fibres coagulated in alkaline coagulation bath and stretched in alkaline stretching having nitrogen content of 0.8 % were subjected to post-hydrolysis in after-treatment by treating fibres with post-hydrolysis liquor containing Na₂CO₃ and NaOH for 3 min at 95 degrees Celsius, nitrogen content of the recovered fibre was 0.17 wt-%), b) acidic and/or neutral and/or alkaline bleaching step and/or c) spin finishing. Thus, the fibre properties may be manipulated during coagulation, stretching, further washing and/or further after-treatment depending on the alkalinity, temperature and residence time in each step, especially selecting such after-treatment conditions in order to adjust the hydrolysis rate of the cellulose carbamate.

The shape of the fibre may be modified by adjusting degree of substitution of cellulose carbamate entering spinning and stretching, e.g. roundish oval, bean or lobed fibres may be obtained as a result of spinning and stretching of controlled nitrogen containing cellulose carbamate, creating a smooth surface.

According to one embodiment, there is provided a method of producing cellulose carbamate filaments or fibres, comprising the steps of providing a cellulose carbamate dope containing cellulose carbamate dissolved in aqueous sodium hydroxide, said dope further exhibiting a dissolved zinc compound, and feeding the dope into a coagulation unit.

According to one specific embodiment, the aqueous alkaline cellulose carbamate dope comprises:
- 6 - 10 wt-%, preferably 8 - 10 wt-% of cellulose carbamate (CCA),
- 5 - 10 wt-%, preferably 5 - 7 wt-% of sodium hydroxide (NaOH), and
- 0.08 - 1.6 wt-%, preferably 0.08 - 1.2 wt-% of zinc,
weight percentages (wt- %) being calculated from the total weight of the cellulose carbamate dope. If zinc oxide (ZnO) is used, the amounts are 0.1-2 wt-%, preferably 0.1-1.5 wt-%. It is also possible to use other zinc compounds, such as sodium zincate. Indeed, the cellulose carbamate may be dissolved in an aqueous alkaline solution made of sodium hydroxide and zinc oxide, or zinc hydroxide in a sodium hydroxide solution. The addition of zinc has been shown to improve the solubility of cellulose carbamate and it improves the stability of the cellulose carbamate solution. The alkaline solution is in this case made from sodium hydroxide and zinc oxide and/or zinc hydroxide, whereby zincate is formed. Thus, in embodiments the alkaline solution comprises sodium zincate.

The cellulose carbamate can be directly dissolved in sodium hydroxide, typically in concentration 5-10 % by weight of cellulose carbamate dope. Concentration of the carbamate in cellulose carbamate dope has a significant effect on the cost of the process. At lower DP values and when polydispersity is narrow, the amount of sodium hydroxide maybe decreased and/or concentration of CCA in solution increased. When cellulose carbamate is dissolved (carbamate) hydrolysis begins and some carbamate groups hydrolyse during dissolution and further process steps including filtration and deaeration of the cellulose carbamate dope. Nitrogen content of the cellulose carbamate may be adjusted by changing dissolution conditions such as time, temperature, and/or sodium hydroxide concentration. At low temperatures hydrolysis is slow, which increases the time for which dissolved CCA can be stored. Optimal nitrogen content for wet spinning or coagulation of cellulose carbamate depends on coagulation process and target application. Carbamate hydrolysis stops when coagulating happens in an acid coagulation bath. In case of alkaline coagulation baths, hydrolysis of the cellulose carbamate takes place also during coagulation and further alkaline stretching stage(s). In case of both the acidic and alkaline spinning, the coagulated and stretched fibres can be subject to further alkaline after-treatment step(s), wherein the alkaline hydrolysis may be continued under controlled conditions. Nitrogen content of the final product maybe adjusted in washing and after-treatment stage where remaining carbamate groups may be removed mainly by alkaline treatment steps.

According to embodiments coagulated films of cellulose carbamate are also provided. In one embodiment coagulated films of cellulose carbamate are provided having an average cellulose solution intrinsic viscosity of 146 to 368 ml/g, preferably 161 to 368 ml/g, suitably 182 to 267 ml/g, a nitrogen content of up to 2 % by weight, a polydispersity index of 2.0 to 5.0, preferably 2.0 to 4.0, most preferably 2.0 to 3.5 and having a content of p-terephthalate and/or p-terephthalic acid and/or unhydrolyzed or partly unhydrolyzed polyethylene terephthalate (PES) of 0.00005 to 0.1 % by weight. Optionally the films exhibit fluorescence, preferably at a wavelength in the range of 400 to 520 nm typically when excited with UV light, preferably having a wavelength of 365 nm.

In a further embodiment the films comprise cellulose carbamate having an Mₙ of less than or equal to 80,000 g/mol, preferably 30,000 to 80,000 g/mol, suitably 30,000 to 60,000 g/mol.

In a particular embodiment the films are obtained by extruding cellulose carbamate dope in a coagulation bath to form a film.

Further embodiments relate to articles. In one embodiment is provided a textile garment comprising a cloth, woven fabric or knitted fabric from fibrous threads, at least a part of which consist of cellulose carbamate fibres according to any of the above described embodiments. In a suitable embodiment is provided an article comprising non-woven sheets, wadding, and/or weave, which consist of cellulose carbamate fibres according to any of the above-described embodiments.

In a further embodiment, the article is a shaped article, such as a sponge, or a foam. In an embodiment, the shaped article may be a moulded article, for example a composite. The shaped articles of such embodiments comprise particulate cellulose carbamate and/or cellulose carbamate fibres.

It has surprisingly been found that the presence of cellulose carbamate fibres or films, or particles, particularly cellulose carbamate fibres or films, or particles described herein above, can be determined by fluorescence detection. Thus, embodiments provide a method of determining the presence of cellulose carbamate fibres or films in an article containing such fibres or film.

In an embodiment, the method comprises subjecting the article to UV light, preferably at 365 nm and detecting fluorescence at a wavelength in the range of 400 to 520 nm caused by said cellulose carbamate fibres. In one embodiment the article is a yarn, tow of filaments, staple fibres, shortcut fibres, flock or film. In a further embodiment the article is a textile garment containing such fibres, such as bleached and/or coloured articles. Pursuant to the foregoing, in an embodiment, if cellulose carbamate has been mixed with viscose, lyocell or modal in fibres, filaments, yarn or fabric, the presence of cellulose carbamate in man-made cellulosic fibre mixtures can be detected by fluorescence because other regenerated fibres are not fluorescent.

Some embodiments will be illustrated with the following examples.

### Example 1: Chemical pre-treatment, carbamation and wet spinning

Recycled mixed colour sorted cotton textile waste, polycotton feedstock, with CED viscosity of 800 ml/g (ISO 5351:2010) containing 4.0 wt-% of non-cellulosic fibres (mainly polyester, but also traces of nylon, isoprene containing material (elastic band), polyethylene/polypropylene) were mechanically shredded to disintegrate the fabric structure to form of pieces having fibres of a length of average 6 mm. The shredded material was chemically pre-treated using the two-stage cooking procedure and bleaching/decolourisation: in the first acidic stage material was treated with sulphuric acid. In the second alkaline stage the washed acid treated material was chemically treated with sodium hydroxide to hydrolyse majority of polyester.

In the first acidic stage, the shredded material was treated with sulphuric acid at 95 degrees Celsius for 60 min. Textile waste consistency was 10 wt-% and the initial acid charge was 5.0 g/l. The medium consistency pulp was treated in continuous plug flow reactor. The pH value of the final washing liquid was 3.2 measured in wash filtrate corresponding 0.6 g of free sulphuric acid per kilogram of dry acid treated material. The viscosity of the acid treated material was 294 ml/g (based on the CED viscosity measurement according to ISO 5351:2010).

In a second, alkaline stage the washed, acid treated material was chemically treated in a pressure reactor equipped with a medium consistency pump with sodium hydroxide at 110 °C for 120 min. Textile waste consistency was 8.3 wt-% and initial alkali charge was 72 g/l. pH value of the final washing liquid was 10.0. The viscosity of the chemically pre-treated material was 290 ml/g (based on the CED viscosity measurement according to ISO 5351:2010). Average yield through alkaline stage was 92 wt-% solids on oven dried material.

In the decolourisation stage, including both ozone and alkaline hydrogen peroxide treatment stages, the polymerisation degree was further adjusted. Ozone treatment in the alkaline range does not significantly reduce CED viscosity of the material; in particular the loss in viscosity is smaller than that which obtained with ozone in acidic conditions. Thus, a narrow polydispersity index obtained in preceding process stages is maintained in alkaline decolourisation phase. The material obtained from decolourisation process was suitably dewatered in press and with an air flow, for the subsequent carbamation process.

Ozone decolourisation was performed using a medium consistency loop and pressure reactor. The loop was first filled with warm softened water and the shredded textile (300 kg, bone dry) was emptied to the system. Next, the raw material and water slurry was fed to a pressure reactor. NaOH, 20 kg/BDT (bone dry metric ton of the raw material) was fed to the reactor and a textile waste consistency of 8.5 wt-% with pH 11.8 was obtained. The pre-treated textile-water slurry was heated to 70 °C. The estimated ozone concentration fed to the reaction was 16 wt-% and the time for the feeding was 150 minutes. Total ozone charge was 4.0 kg /BDT. After the ozone stage the slurry was cooled by adding 4.0 m³ water. Cooled and diluted slurry was dewatered in a screw press. The pH of the filtrate was 10.0. The viscosity of the ozone decolourised material was 279 ml/g (ISO 5351:2010).

Next, a peroxide stage was performed on the ozone decolourised textile material. The ozone treated material was pumped to the reactor and a consistency of the slurry in the pressure reactor was 8.0 wt-%. The reaction mixture was heated to a reaction temperature of 80 °C and pH was adjusted with NaOH to 11.6. The reaction time in the peroxide stage was 60 minutes and hydrogen peroxide charge was 5 kg/BDT. The decolourised material was washed thorough with screw press. Consistency in the screw press feed was 2.2 wt-% and thickening factor was 21 in the first washing sequence. In the second wash sequence, the thickening factor was 25. The viscosity of the decolourised pulp obtained was 265 ml/g (ISO 5351:2010).

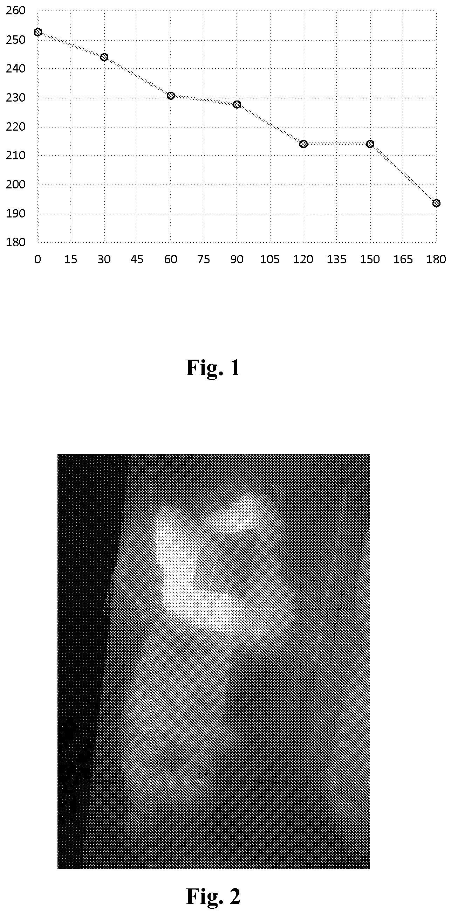

The carbamation process was carried out as described in Finnish patents FI 112869, FI 112795, and in International patent application publication WO 2021/038136 A. In the carbamation stage the degree of polymerisation of the cellulose and polydispersity of the final product were optimised by chemicals, time, grinding and temperature. Figure 1 illustrates the results of optimisation with respect of time, showing how the CED viscosity (in ml/g, on the y-axis) changes with reaction time (in minutes, on the x-axis). The bulk density of the final composition was adjusted by grinding. After the carbamation of the decolourised sample (described above) the viscosity of the cellulose carbamate obtained was 210 ml/g (ISO 5351:2010) corresponding to DP of 268 and PD of 3.28, see Table 1.

The cellulose carbamate obtained from carbamation process was further dissolved for production of cellulose carbamate fibres by the wet spinning process: the ground air dry cellulose carbamate powder was slurried and dissolved in aqueous sodium hydroxide solution containing dissolved zinc oxide to form cellulose carbamate dope having zinc oxide content of 1.2 wt-%, sodium hydroxide content of 6.5 wt-% and cellulose carbamate content of 8.5 wt-%, the rest being water. The cellulose carbamate dope obtained from the dissolving process was subsequently filtered using a two-stage backflush filtering process using a 20 µm filter media in the second filtration stage. Wet spinning of filtered and deaerated cellulose carbamate dope was carried out using an acidic spin bath optimised for cellulose carbamate process containing sodium sulphate, free sulphuric acid and aluminium sulphate, the spin bath having a pH value of 0.75, sodium sulphate to aluminium sulphate ratio of 1.63, density of 1.300 kg/l and temperature of 20 °C.

Viscosity of the chemically pre-treated materials was measured, and the correspondent polydispersity (PD) values are below in Table 1. The results of cellulose carbamate produced from dissolving pulp without pre-treatment to optimise polydispersity were also measured as a comparison, carbamate comp. CED viscosity measurement to determine DP was according to the ISO 5351:2010. Linear density of the fibres (dtex) and fibre tenacity (cN/dtex) of the staple fibres were measured according to ISO 1973:2021 and ISO 5079:2020, respectively. The dried fibres were conditioned at a relative humidity of 65 ± 2 % and temperature of 20 ± 2 °C for at least 24 h. The test speed was 20 mm/min and gauge length 20 mm, an average of 20 measurements (by Favigraph, Textechno) is given. Measured stable fibre properties are summarised in Table 1.

**Table 1**

| **Sample** | **M_{w}** (g/mol) | **Mₙ** (g/mol) | **PD** | **DP** | **Linear density** (dtex) | **Tenacity** (cN/dtex ) |
|---|---|---|---|---|---|---|
| Carbamate | 167500 | 38249 | 4.38 | 279 | passed | passed |
| Carbamate | 187378 | 50288 | 3.73 | 333 | 1.2 | 2.15 |
| Carbamate | 147357 | 43167 | 3.41 | 268 | 1.2 | 2.46 |
| Carbamate | 145842 | 44439 | 3.28 | 268 | 1.2 | 2.52 |
| Carbamate, comp | 324060 | 34628 | 9.36 | | no good fibre | |
| Carbamate, comp | 255411 | 29087 | 8.78 | | no good fibre | |

The M_{w} (g/mol) and Mₙ (g/mol) were measured from the chemically pre-treated cellulose carbamate fibres by GPC/SEC (Gel Permeation Chromatography (GPC)/Size Exclusion Chromatography (SEC) instrument), Agilent PL-GPC 220 System. Samples were dissolved in LiClIDMAc (DMAc standing for dimethylacetamide). The method is relative, pullulan polysaccharide standards and 20 µm mixed-A columns from Polymer Lab were used.

The average particle size of cellulose carbamate composition was measured by sieve analysis. Sieves of different mesh size were piled, biggest mesh size top. Sieve arrangement was from the top 1400 µm, 800 µm, 261 µm, 160 µm, 100 µm, 71 µm, 45 µm, and 30 µm at bottom. Sample was vibrated for 7 minutes. The weight of aggregates retained on each sieve was measured and expressed as the percentage of passing. On average 93 wt-% of particles passed through the 261 µm sieve mesh and 26 wt-% of particles passed through less than 30 µm.

The particle size distribution of the particles was also determined by Malvern Mastersizer 2000: 90 wt-% is of the particles was less than 206 µm and 98 wt-% was less than 500 µm, D50 value was 73 µm. Values corresponded to the sieve analysis.

The effect of degree of polymerisation (DP) and polydispersity of the cellulose carbamate on fibre properties was studied. The cellulose carbamate obtained from carbamation process was further dissolved for production of cellulose carbamate fibres by the wet spinning process. The filament tow obtained from spinning was cut into staple fibres with cut length of 40 mm. Linear density of the fibres and fibre tenacity at break measured from the staple fibres are listed in Table 1 above.

It was noted that narrow polydispersity is beneficial. PD of less than 5.0 was required to draw fibre having sufficient textile fibre quality, i.e. greater than 2.0 dtex. The best fibre results were achieved when DP was less than 300, PD was less than 4.0 and Mₙ was less than 60 000 g/mol.

Degree of polymerisation (DP) of staple fibre was also measured according to ISO 5351:2010. DP did not change during the wet spinning process, the DP being on same level as in corresponding cellulose carbamate.

### Example 2

Cellulose carbamate, Tencel^{™} and viscose fibres were illuminated with UV-source, analytic Jena, 365 nm. The result is shown in Figure 2. A clear distinction was detected as cellulose carbamate fibres glowed blue light even if cellulose carbamate content in fibre mixture was only 20 %.

### Example 3

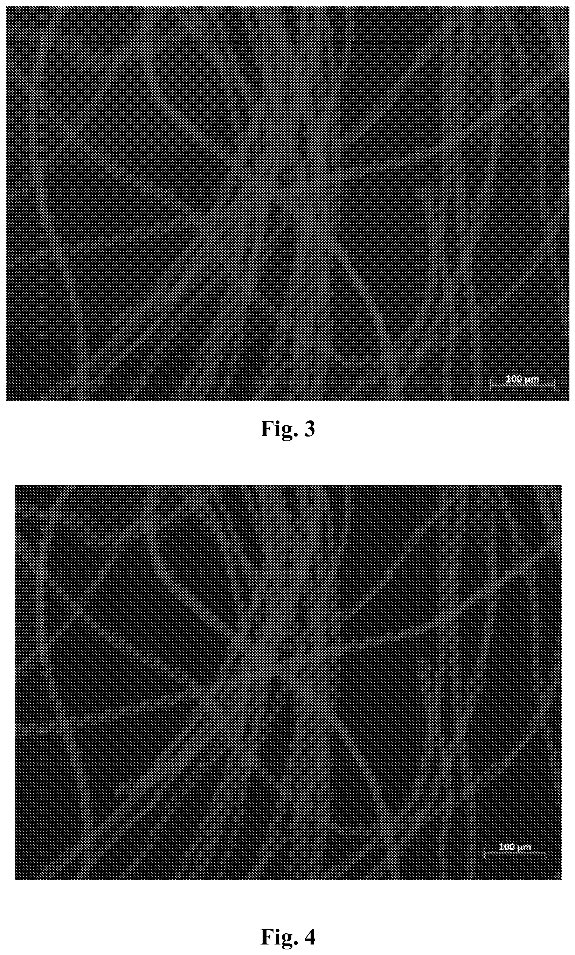

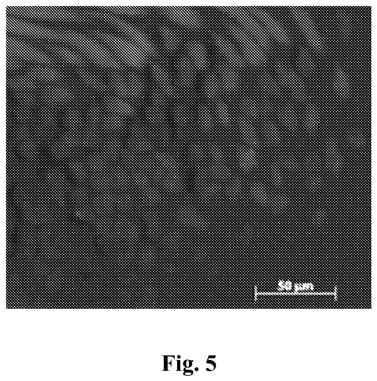

Knitted cellulose carbamate fabric, made of 100 % cellulose carbamate was studied by Light microscopy Zeiss Imager, Z2m and Fluorescence microscope HXP R 120W/45C VIS 320-500 nm. The sample exhibited fluorescence at a wavelength in the range of 400 to 520 nm (blue) when excited at 365 nm, using LP 420 filter, see Figure 3. The sample exhibited fluorescence at a wavelength in the range of 600 to 750 nm (red) when excited at 546 nm, LP 590 filter, see Figure 4. Cross cut sample of the fabric was also prepared and excited at 365 nm, using LP 420 filter, see Figure 5. Cross cuts also exhibited blue fluorescence.

### Example 4

A content of terephthalic acid in cellulose carbamate fibre produced as described in Example 1 was measured by GC/MS (gas chromatography-mass spectrometry) system. The sample was acidified by hydrochloric acid, pH < 3, and dried in oven overnight. Free terephthalic acid was extracted from the sample by pyridine/methanol solvent and concentrated into 5 ml. The extracted terephthalic acid was methylated and analysed by GC/MS. The free terephthalic acid content is the sample was calculated against external calibration standard. The amount of terephthalic acid was 5 mg/kg (of cellulose carbamate fibre).

### Example 5

A content of terephthalic acid in cellulose carbamate polymer produced as described in Example 1 was measured by GC/MS (gas chromatography-mass spectrometry system. The sample was first refluxed in sodium hydroxide (10 wt-%) for 4 hours to hydrolyse polyethylene terephthalate in the sample. Terephthalic acid was extracted from the sample, dissolved in pyridine/methanol solvent and concentrated into 5 ml. The extracted terephthalic acid was methylated and analysed by GC/MS. Terephthalic acid content was calculated against external calibration standard. The amount of terephthalic acid was 1078 mg/kg (of cellulose carbamate polymer).

It is to be understood that the embodiments of the invention disclosed are not limited to the particular structures, process steps, or materials disclosed herein, but are extended to equivalents thereof as would be recognised by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a *de facto* equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as *de facto* equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognise, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in at least the textiles industry. Cellulose carbamate can be used to form high quality textile fibres from recyclable cellulosic materials as well as from virgin raw materials. In addition to providing high quality textile fibres, cellulose carbamate has a diverse range of uses in extruded films, in composites, sponges, foams, pigments, glues, stabilising agents and e.g. in the stationary phase of chromatographic columns for use in various analytical methods.

### ABBREVIATIONS

- DP: Degree of polymerisation
- PD: Polydispersity
- CCA: Cellulose carbamate
- PET: Poly(ethylene terephthalate)

## Claims

1. Cellulose carbamate polymer having
- an average intrinsic viscosity of 146 to 368 ml/g;
- a nitrogen content of 0.01 to 3 % by weight;
- a polydispersity index of 2.0 to 5.0; and
- having a content of p-terephthalate and/or p-terephthalic acid and/or unhydrolyzed or partly unhydrolyzed polyester of 0.00005 to 0.5 % by weight.

2. The cellulose carbamate according to claim 1, having an average intrinsic viscosity of 161 to 368 ml/g, suitably 182 to 267 ml/g.

3. The cellulose carbamate according to claim 1 or 2, having a polydispersity of 2.0 to 4.0, most preferably 2.0 to 3.5.

4. The cellulose carbamate according to any of the claims 1 to 3, exhibiting a content of p-terephthalate and/or p-terephthalic acid and/or unhydrolyzed or partly unhydrolyzed polyester, in particular polyethylene terephthalate, of less than 0.2 % by weight, preferably less than 0.1 % by weight.

5. The cellulose carbamate according to any of the preceding claims, having a biuret concentration of less than 0.3 % by weight.

6. The cellulose carbamate according to any of the preceding claims, having a maximum nitrogen content of 2.5 % by weight, suitably in the range of 0.5 to 2.0 % by weight, preferably maximum 1.5 % by weight.

7. The cellulose carbamate polymer according to any of the preceding claims, having an Mₙ of less than or equal to 80,000 g/mol, preferably in the range of 30,000 g/mol to less than or equal to 80,000 g/mol, suitably in the range of 30,000 g/mol to 60,000 g/mol.

8. The cellulose carbamate polymer according to any of the preceding claims, exhibiting fluorescence at a wavelength in the range of 400 to 520 nm under excitation from UV light.

9. A composition comprising particulate cellulose carbamate, said cellulose carbamate consisting of particles having an average particle size whereby greater than or equal to 90 wt-% of the cellulose carbamate passes through a 260 µm sieve mesh, the share of less than 30 µm sieve fraction is greater than or equal to 10 wt-% and having an average intrinsic viscosity of 146 to 368 ml/g, a nitrogen content of 0.01 to 3 % by weight, a polydispersity index of 2.0 to 5.0, and having a content of p-terephthalate and/or p-terephthalic acid and/or unhydrolyzed or partly unhydrolyzed polyethylene terephthalate of 0.00005 to 0.5 % by weight.

10. The composition according to claim 9, exhibiting a fibrous fraction that has an average fibre length of less than or equal to 1.0 mm according to ISO 16065-2:2014.

11. The composition according to any of the claims 9 to 10, wherein the composition is alkaline.

12. The composition according to any of the claims 9 to 11, comprising 98 to 100 wt-% of said cellulose carbamate, calculated from the dry solids content, preferably over 98 % by weight of the cellulose carbamate, preferably over 99 % by weight of the cellulose carbamate and suitably over 99.5 % by weight of the cellulose carbamate.

13. The composition according to any of the claims 9 to 12, having a dry solids content of at least 20 wt-%, preferably 40 to 60 wt-% or more, most preferably 90 to 100 wt-% calculated from the total weight of the composition.

14. The composition according to any of the claims 9 to 13, having a bulk density of 300 kg/m³ to 800kg/m³, preferably 300 - 500 kg/m³, measure by ISO 60:1977.

15. The composition according to any of the claims 9 to 14, said cellulose carbamate having an Mₙ of less than or equal to 80,000 g/mol, preferably 30,000 to 80,000 g/mol, suitably 30,000 to 60,000 g/mol.

16. The composition according to any of the claims 9 to 15 exhibiting fluorescence at a wavelength in the range of 400 to 520 nm under excitation from UV light.

17. A coagulated cellulose carbamate material having
- an average an average intrinsic viscosity of 146 to 368 ml/g,
- a nitrogen content of up to 2 % by weight,
- a polydispersity index of 2.0 to 5.0, and
- having a content of p-terephthalate and/or p-terephthalic acid and/or unhydrolyzed or partly unhydrolyzed polyethylene terephthalate of 0.00005 to 0.1 % by weight.

18. The coagulated material according to claim 17, wherein the material is in the form of fibres or a film.

19. The coagulated material according to claim 17 or 18, comprising cellulose carbamate having an average intrinsic viscosity of 161 to 368 ml/g, suitably 182 to 267 ml/g, and/or having a polydispersity index of 2.0 to 4.0, most preferably 2.0 to 3.5, and/or exhibiting an Mₙ of less than or equal to 80,000 g/mol, preferably 30,000 to 80,000 g/mol, suitably 30,000 to 60,000 g/mol, and/or exhibiting fluorescence at a wavelength in the range of 400 to 520 nm under excitation from UV light.

20. The coagulated material according to any of the claims 17 to 19, wherein the material is in the form of fibres, obtained by
- providing a composition according to any of claims 9 to 16,
- forming a dope of said composition,
- coagulating the fibres in a spin bath to form fibres,
- recovering the fibres from the spin bath,
- stretching the fibres, and
- washing the fibres,
wherein the spin bath is acidic and the fibres are stretched in acidic conditions, or the spin bath is alkaline and the fibres are stretched in alkaline conditions.

21. The coagulated material according to claim 20, wherein the spin bath is acidic and the cellulose carbamate has a nitrogen content of 0.1 to 2 % by weight.

22. The coagulated material according to claim 20, wherein the spin bath is alkaline and the cellulose carbamate has a nitrogen content of 0.3 to 3 % by weight.

23. The coagulated material according to any of the claims 17 to 19, wherein the material is in film form, obtained by extruding cellulose carbamate in a coagulation bath to form a film.

24. A yarn, a filament yarn, a textile, woven or knitted fabric, a textile garment comprising a cloth, a woven fabric, a fabric knitted from fibrous threads, at least a part of which consists of cellulose carbamate according to any of claims 1 to 8.

25. An article comprising a staple fibre, a shortcut fibre, flock, non-woven, wadding, weave, tow, filament yarn, tow of filaments at least part of which comprises cellulose carbamate according to any of the claims 1 to 8.

26. Use of cellulose carbamate according to any of the claims 1-8 in an absorption material, a composite, a chromatographic column, an organic pigment, a glue or a microbiological activity stabiliser.

27. A method for the manufacture of cellulose carbamate polymer, comprising
- a mechanical pre-treatment of cellulose-based material comprising at least 50 wt-% of cellulose-containing waste, wherein at least 50 wt-% of the cellulose-containing waste is textile waste comprising polyester, by at least grounding or shredding to elements having fibres of a length of ≤ 25 mm;
- an acidic treatment of the mechanically treated cellulose-based material;
- an alkaline treatment after the acidic treatment, to at least partially hydrolyse the polyester;
- decolourising the treated cellulose-based material with ozone under alkaline conditions; and
- a cellulose carbamation step to form cellulose carbamate from the alkaline-treated cellulose-based material;
wherein a polydispersity index of the resulting cellulose carbamate is adjusted to 2.0-5.0 by the acidic treatment.

## Patentansprüche

1. Cellulosecarbamatpolymer, das aufweist
- eine durchschnittliche Grenzviskosität von 146 bis 368 ml/g;
- einen Stickstoffgehalt von 0,01 bis 3 Gew.-%;
- einen Polydispersitätsindex von 2,0 bis 5,0; und
- das einen Gehalt an p-Terephthalat und/oder p-Terephthalsäure und/oder
unhydrolysiertem oder teilweise unhydrolysiertem Polyester von 0,00005 bis 0,5 Gew.-% aufweist.

2. Cellulosecarbamat nach Anspruch 1, das eine durchschnittliche Grenzviskosität von 161 bis 368 ml/g, geeigneterweise 182 bis 267 ml/g, aufweist.

3. Cellulosecarbamat nach Anspruch 1 oder 2, das eine Polydispersität von 2,0 bis 4,0, besonders bevorzugt 2,0 bis 3,5, aufweist.

4. Cellulosecarbamat nach einem der Ansprüche 1 bis 3, das einen Gehalt an p-Terephthalat und/oder p-Terephthalsäure und/oder unhydrolysiertem oder teilweise unhydrolysiertem Polyester, insbesondere Polyethylenterephthalat, von weniger als 0,2 Gew.-%, vorzugsweise weniger als 0,1 Gew.-%, vorweist.

5. Cellulosecarbamat nach einem der vorstehenden Ansprüche, das eine Biuretkonzentration von weniger als 0,3 Gew.-% aufweist.

6. Cellulosecarbamat nach einem der vorstehenden Ansprüche, das einen maximalen Stickstoffgehalt von 2,5 Gew.-%, geeigneterweise im Bereich von 0,5 bis 2,0 Gew.-%, vorzugsweise maximal 1,5 Gew.-%, aufweist.

7. Cellulosecarbamatpolymer nach einem der vorstehenden Ansprüche, das einen Mₙ von weniger als oder gleich 80.000 g/mol, vorzugsweise im Bereich von 30.000 g/mol bis weniger als oder gleich 80.000 g/mol, geeigneterweise im Bereich von 30.000 g/mol bis 60.000 g/mol, aufweist.

8. Cellulosecarbamatpolymer nach einem der vorstehenden Ansprüche, das unter Anregung von UV-Licht Fluoreszenz bei einer Wellenlänge im Bereich von 400 bis 520 nm vorweist.

9. Zusammensetzung, die partikuläres Cellulosecarbamat umfasst, wobei das Cellulosecarbamat aus Partikeln besteht, die eine durchschnittliche Partikelgröße aufweisen, wodurch größer als oder gleich 90 Gew.-% des Cellulosecarbamats durch ein 260 µm Siebgewebe hindurchgehen, der Anteil einer Siebfraktion von weniger als 30 µm größer als oder gleich 10 Gew.-% ist und eine durchschnittliche Grenzviskosität von 146 bis 368 ml/g aufweist, einen Stickstoffgehalt von 0,01 bis 3 Gew.-%, einen Polydispersitätsindex von 2,0 bis 5,0 und einen Gehalt an p-Terephthalat und/oder p-Terephthalsäure und/oder unhydrolysiertem oder teilweise unhydrolysiertem Polyethylenterephthalat von 0,00005 bis 0,5 Gew.-% aufweist.

10. Zusammensetzung nach Anspruch 9, die eine Faserfraktion vorweist, die eine durchschnittliche Faserlänge von kleiner als oder gleich 1,0 mm gemäß ISO 16065-2:2014 aufweist.

11. Zusammensetzung nach einem der Ansprüche 9 bis 10, wobei die Zusammensetzung alkalisch ist.

12. Zusammensetzung nach einem der Ansprüche 9 bis 11, die 98 bis 100 Gew.-% des Cellulosecarbamats, anhand des Trockenfeststoffgehalts berechnet, vorzugsweise mehr als 98 Gew.-% des Cellulosecarbamats, vorzugsweise mehr als 99 Gew.-% des Cellulosecarbamats, und geeigneterweise mehr als 99,5 Gew.-% des Cellulosecarbamats umfasst.

13. Zusammensetzung nach einem der Ansprüche 9 bis 12, die einen Trockenfeststoffgehalt von mindestens 20 Gew.-%, vorzugsweise 40 bis 60 Gew.-% oder mehr, besonders bevorzugt 90 bis 100 Gew.-%, anhand des Gesamtgewichts der Zusammensetzung berechnet, aufweist.

14. Zusammensetzung nach einem der Ansprüche 9 bis 13, die eine Schüttdichte von 300 kg/m³ bis 800 kg/m³, vorzugsweise 300-500 kg/m³, gemäß ISO 60:1977 gemessen, aufweist.

15. Zusammensetzung nach einem der Ansprüche 9 bis 14, wobei das Cellulosecarbamat einen Mₙ von weniger als oder gleich 80.000 g/mol, vorzugsweise 30.000 bis 80.000 g/mol, geeigneterweise 30.000 bis 60.000 g/mol, aufweist.

16. Zusammensetzung nach einem der Ansprüche 9 bis 15, die unter Anregung von UV-Licht Fluoreszenz bei einer Wellenlänge im Bereich von 400 bis 520 nm vorweist.

17. Koaguliertes Cellulosecarbamatmaterial, das aufweist
- eine durchschnittliche Grenzviskosität von 146 bis 368 ml/g,
- einen Stickstoffgehalt von bis zu 2 Gew.-%,
- einen Polydispersitätsindex von 2,0 bis 5,0, und
- das einen Gehalt an p-Terephthalat und/oder p-Terephthalsäure und/oder
unhydrolysiertem oder teilweise unhydrolysiertem Polyethylenterephthalat von 0,00005 bis 0,1 Gew.-% aufweist.

18. Koaguliertes Material nach Anspruch 17, wobei das Material in Form von Fasern oder einer Folie vorliegt.

19. Koaguliertes Material nach Anspruch 17 oder 18, das Cellulosecarbamat umfasst, das eine durchschnittliche Grenzviskosität von 161 bis 368 ml/g, geeigneterweise 182 bis 267 ml/g, aufweist, und/oder einen Polydispersitätsindex von 2,0 bis 4,0, besonders bevorzugt 2,0 bis 3,5, aufweist, und/oder einen Mₙ von weniger als oder gleich 80.000 g/mol, vorzugsweise 30.000 bis 80.000 g/mol, geeigneterweise 30.000 bis 60.000 g/mol, vorweist, und/oder unter Anregung von UV-Licht Fluoreszenz bei einer Wellenlänge im Bereich von 400 bis 520 nm vorweist.

20. Koaguliertes Material nach einem der Ansprüche 17 bis 19, wobei das Material in Form von Fasern vorliegt, die erhalten werden durch
- Bereitstellen einer Zusammensetzung nach einem der Ansprüche 9 bis 16,
- Bilden einer Spinnlösung aus der Zusammensetzung,
- Koagulieren der Fasern in einem Spinnbad, um Fasern zu bilden,
- Gewinnen der Fasern aus dem Spinnbad,
- Dehnen der Fasern, und
- Waschen der Fasern,
wobei das Spinnbad sauer ist und die Fasern unter sauren Bedingungen gedehnt werden, oder das Spinnbad alkalisch ist und die Fasern unter alkalischen Bedingungen gedehnt werden.

21. Koaguliertes Material nach Anspruch 20, wobei das Spinnbad sauer ist und das Cellulosecarbamat einen Stickstoffgehalt von 0,1 bis 2 Gew.-% aufweist.

22. Koaguliertes Material nach Anspruch 20, wobei das Spinnbad alkalisch ist und das Cellulosecarbamat einen Stickstoffgehalt von 0,3 bis 3 Gew.-% aufweist.

23. Koaguliertes Material nach einem der Ansprüche 17 bis 19, wobei das Material in Folienform vorliegt, die durch Extrudieren von Cellulosecarbamat in einem Koagulationsbad erhalten wird, um eine Folie zu bilden.

24. Garn, Filamentgarn, Textil, Gewebe oder Gewirk, Textilbekleidung, die ein Tuch, Gewebe, einen aus fasrigen Fäden gewirkten Stoff umfasst, von denen mindestens ein Teil aus Cellulosecarbamat nach einem der Ansprüche 1 bis 8 besteht.

25. Artikel, der eine Stapelfaser, eine Kurzschnittfaser, Flock, Vlies, Watte, Gewebe, Werg, Filamentgarn, Filamentwerg umfasst, von denen mindestens ein Teil davon Cellulosecarbamat nach einem der Ansprüche 1 bis 8 umfasst.

26. Verwendung von Cellulosecarbamat nach einem der Ansprüche 1-8 in einem Absorptionsmaterial, einem Verbundwerkstoff, einer Chromatographiesäule, einem organischen Pigment, einem Klebstoff oder einem Stabilisator für mikrobiologische Aktivität.

27. Verfahren zur Herstellung von Cellulosecarbamatpolymer, umfassend
- eine mechanische Vorbehandlung von Material auf Cellulosebasis, das mindestens 50 Gew.-% cellulosehaltigen Abfall umfasst, wobei mindestens 50 Gew.-% des cellulosehaltigen Abfalls Textilabfall ist, der Polyester umfasst, durch mindestens Mahlen oder Schreddern auf Elemente, die Fasern mit einer Länge von ≤ 25 mm aufweisen;
- eine saure Behandlung des mechanisch behandelten Materials auf Cellulosebasis;
- eine alkalische Behandlung nach der sauren Behandlung, um den Polyester mindestens teilweise zu hydrolysieren;
- Entfärben des behandelten Materials auf Cellulosebasis mit Ozon unter alkalischen Bedingungen; und
- einen Cellulosecarbamierungsschritt, um aus dem alkalisch behandelten Material auf Cellulosebasis Cellulosecarbamat zu bilden;
wobei ein Polydispersitätsindex des resultierenden Cellulosecarbamats durch die saure Behandlung auf 2,0-5,0 angepasst wird.

## Revendications

1. Polymère de carbamate de cellulose présentant
- une viscosité intrinsèque moyenne de 146 à 368 ml/g ;
- une teneur en azote de 0,01 à 3 % en poids ;
- un indice de polydispersité de 2,0 à 5,0 ; et
- présentant une teneur en p-téréphtalate et/ou acide p-téréphtalique et/ou
polyester non hydrolysé ou partiellement non hydrolysé de 0,00005 à 0,5 % en poids.

2. Carbamate de cellulose selon la revendication 1, présentant une viscosité intrinsèque moyenne de 161 à 368 ml/g, de manière appropriée de 182 à 267 ml/g.

3. Carbamate de cellulose selon la revendication 1 ou 2, présentant une polydispersité de 2,0 à 4,0, le plus préférentiellement de 2,0 à 3,5.

4. Carbamate de cellulose selon l'une quelconque des revendications 1 à 3, présentant une teneur en p-téréphtalate et/ou acide p-téréphtalique et/ou polyester non hydrolysé ou partiellement non hydrolysé, en particulier polyéthylène téréphtalate, de moins de 0,2 % en poids, de préférence moins de 0,1 % en poids.

5. Carbamate de cellulose selon l'une quelconque des revendications précédentes, présentant une concentration en biuret inférieure à 0,3 % en poids.

6. Carbamate de cellulose selon l'une quelconque des revendications précédentes, présentant une teneur maximale en azote de 2,5 % en poids, de manière appropriée dans la plage de 0,5 à 2,0 % en poids, de préférence au maximum de 1,5 % en poids.

7. Polymère de carbamate de cellulose selon l'une quelconque des revendications précédentes, présentant une valeur Mₙ inférieure ou égale à 80 000 g/mol, de préférence dans la plage de 30 000 g/mol à 80 000 g/mol ou moins, de manière appropriée dans la plage de 30 000 g/mol à 60 000 g/mol.

8. Polymère de carbamate de cellulose selon l'une quelconque des revendications précédentes, présentant une fluorescence à une longueur d'onde dans la plage de 400 à 520 nm sous excitation par lumière UV.

9. Composition comprenant du carbamate de cellulose particulaire, ledit carbamate de cellulose consistant en des particules présentant une taille moyenne de particules, selon laquelle 90 % en poids ou plus du carbamate de cellulose passe à travers une maille de tamis de 260 µm, la part de la fraction inférieure à un tamis de 30 µm est supérieure ou égale à 10 % en poids et présente une viscosité intrinsèque moyenne de 146 à 368 ml/g, une teneur en azote de 0,01 à 3 % en poids, un indice de polydispersité de 2,0 à 5,0 et présente une teneur en p-téréphtalate et/ou acide p-téréphtalique et/ou polyéthylène téréphtalate non hydrolysé ou partiellement non hydrolysé de 0,00005 à 0,5 % en poids.

10. Composition selon la revendication 9, présentant une fraction fibreuse qui présente une longueur moyenne de fibre inférieure ou égale à 1,0 mm selon la norme ISO 16065-2:2014.

11. Composition selon l'une quelconque des revendications 9 à 10, dans laquelle la composition est alcaline.

12. Composition selon l'une quelconque des revendications 9 à 11, comprenant 98 à 100 % en poids dudit carbamate de cellulose, calculé à partir de la teneur en matières solides sèches, de préférence plus de 98 % en poids du carbamate de cellulose, de préférence plus de 99 % en poids du carbamate de cellulose et de manière appropriée plus de 99,5 % en poids du carbamate de cellulose.

13. Composition selon l'une quelconque des revendications 9 à 12, présentant une teneur en matières sèches d'au moins 20 % en poids, de préférence 40 à 60 % en poids ou plus, le plus préférentiellement 90 à 100 % en poids calculée à partir du poids total de la composition.

14. Composition selon l'une quelconque des revendications 9 à 13, présentant une masse volumique apparente de 300 kg/m³ à 800 kg/m³, de préférence 300 - 500 kg/m³, mesurée selon la norme ISO 60:1977.

15. Composition selon l'une quelconque des revendications 9 à 14, ledit carbamate de cellulose présentant une valeur Mₙ inférieure ou égale à 80 000 g/mol, de préférence 30 000 à 80 000 g/mol, de manière appropriée 30 000 à 60 000 g/mol.

16. Composition selon l'une quelconque des revendications 9 à 15 présentant une fluorescence à une longueur d'onde dans la plage de 400 à 520 nm sous excitation par lumière UV.

17. Matériau de carbamate de cellulose coagulé présentant
- une viscosité intrinsèque moyenne de 146 à 368 ml/g,
- une teneur en azote allant jusqu'à 2 % en poids,
- un indice de polydispersité de 2,0 à 5,0, et
- présentant une teneur en p-téréphtalate et/ou acide p-téréphtalique et/ou
polyéthylène téréphtalate non hydrolysé ou partiellement non hydrolysé de 0,00005 à 0,1 % en poids.

18. Matériau coagulé selon la revendication 17, dans lequel le matériau se présente sous forme de fibres ou de film.

19. Matériau coagulé selon la revendication 17 ou 18, comprenant du carbamate de cellulose présentant une viscosité intrinsèque moyenne de 161 à 368 ml/g, de manière appropriée de 182 à 267 ml/g, et/ou présentant un indice de polydispersité de 2,0 à 4,0, le plus préférentiellement de 2,0 à 3,5, et/ou présentant une valeur Mₙ inférieure ou égale à 80 000 g/mol, de préférence 30 000 à 80 000 g/mol, de manière appropriée 30 000 à 60 000 g/mol, et/ou présentant une fluorescence à une longueur d'onde dans la plage de 400 à 520 nm sous excitation par la lumière UV.

20. Matériau coagulé selon l'une quelconque des revendications 17 à 19, dans lequel le matériau se présente sous forme de fibres, obtenues par
- la fourniture d'une composition selon l'une quelconque des revendications 9 à 16,
- la formation d'une solution de ladite composition,
- la coagulation des fibres dans un bain de filage pour former des fibres,
- la récupération des fibres du bain de filage,
- l'étirement des fibres, et
- le lavage des fibres,
dans lequel le bain de filage est acide et les fibres sont étirées dans des conditions acides, ou le bain de filage est alcalin et les fibres sont étirées dans des conditions alcalines.

21. Matériau coagulé selon la revendication 20, dans lequel le bain de filage est acide et le carbamate de cellulose présente une teneur en azote de 0,1 à 2 % en poids.

22. Matériau coagulé selon la revendication 20, dans lequel le bain de filage est alcalin et le carbamate de cellulose présente une teneur en azote de 0,3 à 3 % en poids.

23. Matériau coagulé selon l'une quelconque des revendications 17 à 19, dans lequel le matériau se présente sous forme de film, obtenu par extrusion de carbamate de cellulose dans un bain de coagulation pour former un film.

24. Fil, fil continu, textile, tissu tissé ou tricoté, vêtement textile comprenant une étoffe, un tissu tissé, un tissu tricoté à partir de fils fibreux, dont au moins une partie consiste en du carbamate de cellulose selon l'une quelconque des revendications 1 à 8.

25. Article comprenant une fibre discontinue, une fibre raccourcie, un floc, un non-tissé, une nappe ouatée, un tissage, un câble, un fil continu, un câble de filaments, dont au moins une partie comprend du carbamate de cellulose selon l'une quelconque des revendications 1 à 8.

26. Utilisation du carbamate de cellulose selon l'une quelconque des revendications 1-8 dans un matériau d'absorption, un composite, une colonne chromatographique, un pigment organique, une colle ou un stabilisateur d'activité microbiologique.

27. Procédé de fabrication d'un polymère de carbamate de cellulose, comprenant
- un prétraitement mécanique d'un matériau à base de cellulose comprenant au moins 50 % en poids de déchets contenant de la cellulose, dans lequel au moins 50 % en poids des déchets contenant de la cellulose sont des déchets textiles comprenant du polyester, au moins par broyage ou déchiquetage en éléments présentant des fibres d'une longueur ≤ 25 mm ;
- un traitement acide du matériau à base de cellulose traité mécaniquement ;
- un traitement alcalin après le traitement acide, pour hydrolyser au moins partiellement le polyester ;
- la décoloration du matériau à base de cellulose traité avec de l'ozone dans des conditions alcalines ; et
- une étape de carbamation de cellulose pour former du carbamate de cellulose à partir du matériau à base de cellulose traité de manière alcaline ;
dans lequel un indice de polydispersité du carbamate de cellulose résultant est ajusté à 2,0-5,0 par le traitement acide.
